Europäisches Patentamt

European Patent Office  (11) Publication number: **0 049 167**

Office européen des brevets  **B1**

(12)  # EUROPEAN PATENT SPECIFICATION

(45) Date of publication of patent specification: **06.03.85**    (51) Int. Cl.⁴: **B 60 N 1/00, B 60 N 1/08**

(21) Application number: **81304521.8**

(22) Date of filing: **30.09.81**

(54) **Fore and aft adjustment and isolation assembly for a vehicle seat.**

(30) Priority: **01.10.80 US 192765**

(43) Date of publication of application:
**07.04.82 Bulletin 82/14**

(45) Publication of the grant of the patent:
**06.03.85 Bulletin 85/10**

(84) Designated Contracting States:
**DE FR GB IT SE**

(56) References cited:
**EP-A-0 019 399**
**GB-A-1 081 539**
**US-A-2 932 342**
**US-A-3 100 617**
**US-A-4 087 069**
**US-A-4 378 927**

(73) Proprietor: **UOP Inc.**
**10 UOP Plaza Algonquin & Mt. Prospect Roads**
**Des Plaines Illinois 60016 (US)**

(72) Inventor: **Barley, Geoffrey Wilfred**
**1195 Tanglewood Court**
**Brookfield Wisconsin (US)**

(74) Representative: **Newby, John Ross et al**
**J.Y. & G.W. Johnson Furnival House 14/18 High**
**Holborn**
**London WC1V 6DE (GB)**

Courier Press, Leamington Spa, England.

## Description

This invention relates to a vehicle seat and particularly to a fore and aft adjustment and isolation assembly of the general type disclosed in US—A—4 378 927.

Since vehicles, particularly large trucks, must be provided with suspensions which are capable of handling very heavy loads, they cannot offer the smooth ride of a passenger car. In order to protect the driver from fatigue and the great discomfort induced by vehicle vibrations, it is quite common to provide seat suspension systems incorporating mechanical or fluid springs. The springs isolate the driver from the vertical vibrations, but occupy a considerable amount of space under the seat. This is especially true in the case of air spring suspensions which are greatly preferred over mechanical suspensions due to the fact that they have a constant natural frequency and can be automatically adjusted to the weight of the occupant. Most seats have slide rails which permit adjustment of the fore and aft position of the seat and many have a fore and aft isolation feature which isolates the occupant from fore and aft and pitching vibrations and is typically located under the centre of the seat pan and above the suspension. When a seat is provided with all of the aforementioned features, it must have its seat pan a considerable distance above the floor in order to accommodate them and then becomes too high to be used in certain vehicles which have a relatively limited space between the floor and ceiling. Accordingly, it would appear desirable to have a seat wherein the fore and aft position adjustment and the fore and aft isolation mechanism would not require any more vertical height under the seat.

U.S.—A—3 100 617 discloses a fore and aft shock isolator for a vehicle seat comprising a pair of upper side rails mounted to a seat and a pair of lower side rails, each mounted to the floor, with each set containing a resilient member for absorbing a predetermined amount of fore and aft movement. This patent also states that the system may be designed to leave the space between the rails clear to maximize the clearance for the seat pan, thereby minimizing the overall height of the unit. However, the resilient member of this patent is at all times engaged. Thus, although the equilibrium point of the resilient member is adjustable, it is not possible to lock out the resilient movement. Moreover, is is not shown how the system described in US—A—3 100 617 can be used in conjunction with a vertical vibration absorbing system.

US—A—4378927 discloses a fore and aft-isolation assembly for a vehicle seat to be used with a vertical vibration-isolating system which comprises upper and lower frames mounted for relative sliding movement and an intermediate frame resiliently attached to the second frame. A common operating handle is provided to control the interengagement between the three frames and this operating handle can be set in three positions corresponding to a "fore/aft isolation" position (in which the upper and intermediate frames are locked together but both are resiliently movable relative to the lower frame) a "lockout" position (in which all three frames are rigidly interconnected) and a "fore/aft adjustment" position (in which the intermediate and lower frames are locked together but the upper frame is free to move relative thereto). These known features form the pre-characterising portion of the following claim 1.

US—A—4 378 927 discloses two different embodiments of seat assemblies both of which have the central area of the interlinked frames obstructed by equipment needed for the operation of the seat, so that the vertical vibration-isolation equipment cannot intrude upon this central area.

In order to solve this problem, what constitutes a construction according to the present invention is defined in the characterising portion of the following claim 1:

The construction according to the invention utilises an intermediate frame positioned between the upper frame attached to the seat upper and the lower frame attached to the seat suspension which permits slide rails for the seat and the isolation assembly to be positioned at the periphery of the frame which carries the seat upper so that vertical vibration isolation equipment (e.g. an air spring suspension) can be positioned immediately under the centre of the seat pan, thus ensuring that the seat will have a very low profile.

The rotatable adjusting shaft moves with the upper frame and thus remains conveniently accessible to the operator. A handle on the shaft can be disposed to lie horizontally in the "isolate" position. In the isolate position, the upper and intermediate frames move as one relative to the lower frame but with the movement preferably being restricted to about 25 mm forwardly and 25 mm rearwardly by the resilient biasing means and a pair of bumper members. Shifting the shaft handle downwardly gives the "lockout" position where all the frames are locked to each other. When the shaft handle is temporarily lifted to its uppermost position (e.g. against the force of a biasing return spring), the upper frame can be adjusted fore and aft relative to the lower frame while the intermediate frame floats free except for the restraint provided by the resilient biasing means.

The invention will now be described, by way of example, with reference to the accompanying drawing, in which:—

Figure 1 is a perspective view of one embodiment of fore and aft adjustment and isolation assembly according to the invention showing the parts of the assembly in the "lockout" mode; and

Figures 2 and 3 are fragmentary perspective views of portions of the assembly of Figure 1 showing the portions in their "isolate" and "adjust" modes, respectively.

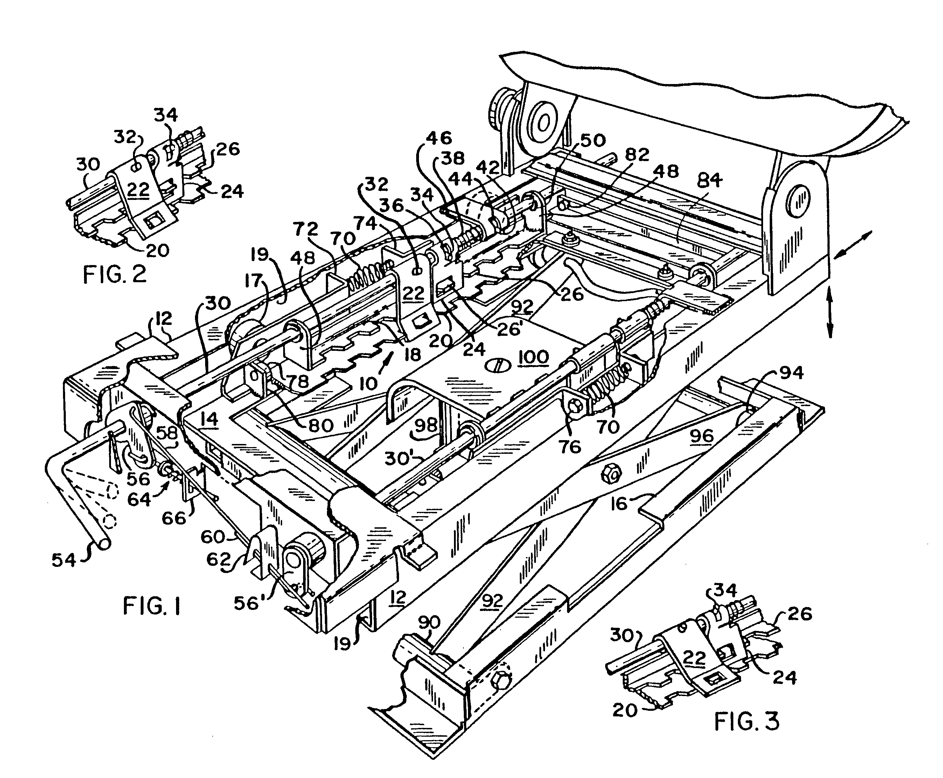

Referring to Figure 1, the improved fore and aft adjustment and isolation assembly is indicated generally at 10 and consists basically of a movably mounted upper seat support frame 12 which carries the seat cushion (not shown) and a lower frame 14 carried by the seat suspension. The lower frame 14 and suspension move vertically relative to a base frame 16 which is adapted to be bolted to the floor of the vehicle. When desired, the upper frame 12 can be moved relative to the lower frame 14 in a fore and aft direction by means of four rollers 17 which are rotatably mounted on the lower frame 14 for rolling contact with the top and bottom inside surfaces of channel members 19 which constitute the side portions of the upper frame 12. The upper frame 12 and the lower frame 14 may be selectively locked together in any one of a series of fore and aft positions by means of a first toothed rack 20 carried by the lower frame 14 and a first locking pawl 22 which can move rotationally, but not axially, relative to the upper frame 12. When the fore and aft vibration isolation mode of operation is desired, the rack 20 and the pawl 22 are disengaged, in a manner hereinafter described, while a second locking pawl 24 is caused to engage the teeth of a second rack 26 carried by an intermediate frame 18. Both of the pawls 22, 24 are carried by a shaft 30 which is mounted for limited rotation, but not axial movement, relative to the upper frame 12. A pin 32 positively fixes the first pawl 22 to the shaft 30 and ensures it rotates as the shaft 30 is rotated. The second pawl 24 is mounted on the shaft 30 by means of a lost-motion connection which includes a pin 34 which is fixed to the shaft 30 and is located in a slot 36 formed in the pawl 24. A biasing spring 38 surrounding the shaft 30 normally causes the second pawl 24 to surround one of a number of teeth 26' on the second rack 26, and to be in contact with the two adjacent teeth on the second rack.

In order that the assembly 10 can be actuated easily by the occupant of the seat in any position of fore and aft adjustment, the shaft 30 is mounted for limited angular movement relative to the upper frame 12 by means of a pin 42 carried by the shaft 30 and located in a slot 44 which is formed in a bracket 46 fixed (e.g. welded) to the upper frame 12. Fore and aft adjustment of the upper frame 12 relative to the lower frame 14 and the intermediate frame 18 is accommodated by virtue of the fact that the shaft 30 is slidably mounted in guides 48 supporting nylon bushings 50 on the intermediate frame 18.

The forward end of the shaft 30 is preferably bent in the manner shown in Figure 1 so as to form a handle portion 54 by which the seat occupant can rotate the shaft 30 to any desired position. A control plate 56 is fixed (e.g. welded) to the shaft 30 and cooperates with wire links 58, 60 and a slave shaft plate 56' to transmit rotation applied to the shaft 30 on the right-hand side of the seat to a slave shaft 30' on the left-hand side of the seat. The elements of the isolation assembly are duplicated on each side of the seat and their movements can be synchronized as necessary by an adjustment clip 62 which engages the wire links 58, 60. An overcentre spring assembly, indicated generally at 64 and comprising a compression spring bearing against a bracket 66 formed on a front beam of the upper frame 12, biases the handle portion 54, in one of the stable conditions of the spring assembly, to a horizontal operating position in which the pawls 22, 23 are in the "isolation" mode shown in Figure 2. In this mode, it can be seen that the first pawl 22 is out of engagement with the rack 20 while the second pawl 24 is in engagement with the second rack 26. Thus, in the "isolation" mode, the upper frame 12 is locked to the intermediate frame 18 but not to the lower frame 14. When the handle portion 54 is pushed down into the lower position, shown in solid lines in Figure 1, into a second stable condition of the spring assembly 64, both pawls 22, 24 will be engaged with their respective racks 20 and 26 so as to provide a "lockout" mode in which the upper frame 12 is rigidly fixed relative to both the lower frame 14 and the intermediate frame 18. When the handle portion 54 is raised above its horizontal position against the urging of the biasing spring 38, each of the pawls 22, 24 will be released from engagement with its respective rack 20, 26 and the seat will be in its "adjust" mode, shown in Figure 3. In this mode, the upper frame 12 can be freely pushed forward or backward to the position desired by the operator and the pawls 22, 24 carried thereby will each be brought adjacent respectively, either a more forward or a more rearward tooth in the respective rack 20 or 26. Release of the handle portion 54 will permit the biasing spring 38 to return the pawls to the "isolation" mode condition shown in Figure 2. The overcentre spring assembly 64 will permit the isolation assembly to be maintained in either its Figure 1 or Figure 2 modes.

A combination tension and compression spring 70 which is attached to a bracket 72 on the lower frame 14 and to a bracket 74 on the intermediate frame 18 by bolts 76, is used to provide fore and aft isolation over a limited range of approximately 25 mm in each direction from its equilibrium position. The total range of movement is determined by a pair of stop members, comprising a front rubber bumper member 78, carried by a bracket 80 which is fixed to the lower frame 14, and a rear rubber bumper member 82, which is mounted to a cross frame member 84 which joins the two sides of the lower frame 14.

It should be readily apparent from Figure 1 that since the fore and aft adjustment and isolation assembly 10 is located at the top and sides of the upper support frame 12, the base frame 16 can be relatively narrow, since it need only support pivoted ends 90 of scissor links 92 and rolling ends 94 of links 96. Such a narrow base frame 16 offers the advantage that it can be more readily accommodated on the limited flat floor space which is available in many vehicles. The arrangement of the components of the isolation assembly 10 on either side of the seat, also results in the seat having an extremely low profile since an air spring 98, which provides vertical vibration isolation, and its top support plate 100, which is fixed (e.g. welded) to the links 92, can move up between the isolation assembly and almost into contact with the bottom of the seat pan (not shown).

**Claims**

1. A fore and aft isolation assembly (10) for a suspended vehicle seat comprising an upper frame (12) adapted to be attached to the bottom of the seat upper, a lower frame (14) adapted to be attached to the top of the seat suspension, an intermediate frame (18) mounted between said upper (12) and lower (14) frames for selective fore and aft movement relative to either of said upper (12) and lower (14) frames, the movement of said intermediate frame (18) relative to one of said upper (12) and lower (14) frames being resiliently resisted in an "isolation" mode in both a fore and aft direction by a resilient biasing means (70), an adjusting shaft (30) mounted on said upper frame for non-axial, rotary movement, said adjusting shaft (30) rotatably activating a first locking member (22) mounted intermediate its ends, said first locking member being used to effect the locking or unlocking of said lower frame (14) with said upper frame (12), said shaft (30) also having a second locking member (24) mounted on said shaft (30) for selective rotation into or out of locking engagement with at least one of a series of fore and aft positioned teeth (26') on said intermediate frame (18), whereby said adjusting shaft (30) is rotatable between a first "lockout" position in which both of first (22) and second (24) locking members are engaged to lock all of the frames (14, 12, 18) together, a second "isolate" position in which only said second locking member (24) is engaged so that said intermediate frame (18) is locked to said upper frame (12) for movement therewith relative to said lower frame (14) against said resilient biasing means (70), and a third "adjust" position wherein both of said locking members (22, 24) are disengaged so that the upper frame (12) may be freely adjusted to any desired position relative to said lower frame (14), characterized in that the first locking member (22) comprises a member positively fixed to said shaft (30) for selective rotation therewith into or out of locking engagement with at least one of a series of fore and aft positioned teeth (20) on said lower frame (14) and in that the central area of all of the frames is open so that portions of a seat suspension system (16, 98, 100) to which the lower frame (14) is adapted to be attached, can move vertically within the confines of said frames.

2. The assembly of claim 1, characterised in that said intermediate frame (18) has spaced apertured vertical mounting portions (48, 50) by which said intermediate frame (18) is freely suspended from said adjusting shaft (30).

3. The assembly of claim 1 or claim 2, characterised in that the movement of the intermediate frame (18) in said "isolation" mode is relative to said lower frame (14) and is resiliently resisted by a tension-compression spring (70) which is anchored at one of its ends with respect to the lower frame (14) and is anchored at the other one of its ends to said intermediate frame (18).

4. The assembly of claim 3, characterised in that resilient bumper members (78, 82) are mounted on said lower frame (14) to engage fore and aft portions of said intermediate frame (18) and limit the distance to which said spring (70) can be expanded or compressed.

5. The assembly of any preceding claim, characterised in that each of said upper (12), lower (14) and intermediate (18) frames have identical mounting and locking structures (20, 22, 24, 26) on each side of the seat.

6. The assembly of claim 5, characterised in that an adjusting shaft (30, 30') is located on each side of the seat, but only one of said shafts (30) includes a handle portion (54), the other shaft (30') being connected to said one shaft (30) by a linkage mechanism (56', 58, 60) so as to move in synchronism therewith.

7. The assembly of claim 6, characterised in that said linkage mechanism includes an adjustment means (62).

8. The assembly of any preceding claim, characterised in that said second locking member is a pawl (24) mounted on said shaft (30) in a "lost motion" arrangement (34, 36) so that rotation of said shaft from its "lockout" position to its "isolate" position will disengage the first locking member (22) while permitting said second locking member (24) to remain engaged until said shaft (30) is additionally rotated to its "adjust" position.

9. The assembly of claim 8, characterised in that a torsion spring (38) biases said second locking member (24) toward its engaged position.

10. The assembly of any preceding claim, characterised in that said adjusting shaft (30) is connected to an overcentre spring assembly (64) which urges it to either its "lockout" position or its "isolate" position.

11. The assembly of claim 10, characterised in that the spring in the overcentre spring assembly (64) is chosen such that the second locking member (24) will be maintained by said torsion spring (38) in locking engagement with the teeth (26') on said intermediate frame (18) in the "isolate" position despite the torque exerted on the shaft (30) by the overcentre spring assembly (64).

**Revendications**

1. Ensemble d'isolement réglable d'avant en arrière (10) pour siège suspendu de véhicule comprenant un cadre supérieur (12) adapté pour être fixé au dessous du cadre supérieur du siège, un cadre inférieur (14) adapté pour être fixé au dessus de la suspension du siège, un cadre intermédiaire (18) monté entre lesdits cadres supérieur (12) et inférieur (14) pour permettre un mouvement sélectif avant-arrière par rapport à l'un ou l'autre desdits cadres supérieur (12) ou inférieur (14), le mouvement dudit cadre intermédiaire (18) par rapport à l'un ou l'autre desdits cadres supérieur (12) ou inférieur (14) étant opposé de façon résiliente dans un mode "isolement" aussi bien vers l'avant que vers l'arrière par un moyen de sollicitation résilient (70), un axe de réglage (30) monté sur ledit cadre supérieur pour obtenir un mouvement rotatif non axial, ledit axe de réglage (30) actionnant par rotation un premier élément de verrouillage (22) monté entre ses extrémités, ledit premier élément de verrouillage étant utilisé pour opérer le verrouillage ou le déverrouillage dudit cadre inférieur (14) par rapport audit cadre supérieur (12), ledit axe (30) ayant aussi un deuxième élément de verrouillage (24) monté sur ledit axe (30) pour obtenir ou quitter par rotation sélective un engagement de verrouillage dans au moins une d'une série de dents (26') placées dans le sens avant-arrière sur ledit cadre intermédiaire (18), de façon à ce que ledit axe de réglage (30) puisse être tourné entre une première position "neutralisation" dans laquelle chacun des premier (22) et second (24) éléments de verrouillage sont engagés pour solidariser par verrouillage tous les cadres (14, 12, 18), une deuxième position "isolement" dans laquelle ledit élément de verrouillage (24) est seul engagé de façon à ce que ledit cadre intermédiaire (18) soit rendu solidaire par verrouillage dudit cadre supérieur (12) pour se déplacer avec celui-ci par rapport audit cadre inférieur (14) en opposition avec ledit moyen de sollicitation résilient (70), et une troisième position "réglage" dans laquelle chacun desdits éléments de verrouillage (22, 24) est dégagé de façon qu'il soit possible de régler librement le cadre supérieur (12) dans toute position voulue par rapport audit cadre inférieur (14), caractérisé en ce que le premier élément de verrouillage (22) comprend un élément fixé positivement audit axe (30) et permettant d'obtenir ou de quitter par rotation sélective un engagement de verrouillage dans au moins une d'une série de dents (20) placées dans le sens avant-arrière sur ledit cadre inférieur (14) et en ce que la partie centrale de tous les cadres est ouverte si bien que des parties d'un système de suspension de siège (16, 98, 100) auxquelles le cadre inférieur (14) est adapté pour être fixé, peuvent se déplacer verticalement dans les limites desdits cadres.

2. Ensemble selon la revendication 1, caractérisé en ce que ledit cadre intermédiaire (18) possède des parties de fixation (48, 50) verticales, percées et montées distantes l'une de l'autre, à l'aide desquelles ledit cadre intermédiaire (18) est suspendu librement audit axe de réglage (30).

3. Ensemble selon la revendication 1 ou la revendication 2, caractérisé en ce que le mouvement du cadre intermédiaire (18) dans le mode dit "isolement" a lieu par rapport audit cadre inférieur (14) et est opposé de façon résiliente par un ressort de tension et de compression (70) dont l'une de ses extrémités est ancrée par rapport au cadre inférieur (14) et son autre extrémité est ancrée audit cadre intermédiaire (18).

4. Ensemble selon la revendication 3, caractérisé en ce que des éléments tampon résilients (78, 82) sont montés sur ledit cadre inférieur (14) de façon à ce quils épousent des parties avant et arrière dudit cadre intermédiaire (18) et qu'ils limitent la distance de détente et de compression dudit ressort (70).

5. Ensemble selon l'une quelconque des revendications précédentes, caractérisée en ce que chacun desdits cadres supérieur (12), inférieur (14) et intermédiaire (18) est pourvu de structures identiques de montage et de verrouillage (20, 22, 24, 26) de chaque côté du siège.

6. Ensemble selon la revendication 5, caractérisé en ce qu'un axe de réglage (30, 30') est situé de chaque côté du siège, mais un seul desdits axes (30) comprend une partie formant poignée (54), l'autre axe (30') étant relié audit seul axe (30) par une articulation mécanique (56', 58, 60) de manière à ce que les mouvements de l'un soient synchronisés par rapport aux mouvements de l'autre.

7. Ensemble selon la revendication 6, caractérisé en ce que ladite articulation mécanique comprend un moyen de réglage (62).

8. Ensemble selon l'une quelconque des revendications précédentes, caractérisé en ce que ledit deuxième élément de verrouillage est un clignet (24) monté sur ledit axe (30) dans le cadre d'un système à mouvement libre (34, 36), si bien que la rotation dudit axe lorsque celui-ci va de sa position "neutralisation" à sa position "isolement" occasionne le dégagement du premier élément de verrouillage (22) tout en permettant audit deuxième élément de verrouillage (24) de rester engagé en attendant que ledit axe (30) soit tourné plus loin à sa position "réglage".

9. Ensemble selon la revendication 8, caractérisé en ce qu'un ressort de torsion (38) sollicite ledit deuxième élément de verrouillage (24) dans le sens de sa position engagée.

10. Ensemble selon l'une quelconque des revendications précédentes, caractérisé en ce que ledit axe de réglage (30) est relié à un ensemble élastique à point mort (64) qui le sollicite soit vers sa position "neutralisation" soit vers sa position "isolement".

11. Ensemble selon la revendication 10, caractérisé en ce que le ressort de l'ensemble élastique à point mort (64) est choisi pour que le deuxième élément de verrouillage (24) soit assujetti par ledit ressort de torsion (38) en engagement de verrouillage dans les dents (26') dudit cadre intermédiaire (18) en position "isolement" indépendamment du moment de couple que l'ensemble élastique à point mort (64) imprime à l'axe (30).

**Patentansprüche**

1. Ein vor- und rückverstellbarer Schwingungsisolierungsaufbau (10) für einen gefederten Fahrzeugsitz, bestehend aus einem oberen Rahmen (12), der für eine Befestigung am Boden des Sitzoberteils ausgeführt ist, einem unteren Rahmen (14), der für eine Befestigung oben an der Sitzfederung ausgeführt ist, einem Zwischenrahmen (18), der zwischen den genannten, oberen (12) und unteren (14) Rahmen befestigt ist, um wahlweise eine Vor- und Rückwärtsbewegung im Verhältnis zu jedem der genannten, oberen (12) und unteren (14) Rahmen ausführen zu können, wobei die Vorwärts- und Rückwärtsbewegung des genannten Zwischenrahmens (18) im Verhältnis zu einem der genannten, oberen (12) und unteren (14) Rahmen in "Trenn"-Stellung über eine erschütterungsarm arbeitende Federvorrichtung (70) federnd abgefangen wird, einer am genannten, oberen Rahmen befestigten Justierwelle (30) zur Ausführung einer nichtachsialen Drehbewegung, wobei die genannte Justierwelle (30) durch ihre Drehbewegung einen zwischen ihren Enden angeordneten, ersten Verriegelungsmechanismus (22) betätigt, der eine Verriegelung oder Freigabe zwischen dem genannten, unteren Rahmen (14) und dem genannten, oberen Rahmen (12) bewirkt, wobei die genannte Welle (30) ebenfalls mit einem zweiten, auf der genannten Welle (30) montierten Verriegelungsmechanismus (24) ausgestattet ist, um wahlweise eine Drehbewegung ausführen zu können, die entweder eine Verriegelung oder Freigabe in bezug auf zumindest einen aus einer Reihe vorwärts- oder rückwärtsgerichteter Zähne (26') am genannten Zwischenrahmen (18) bewirkt, wobei die genannte Justierwelle (30) zwischen einer ersten "Sperr"-Stellung, in der sowohl der erste (22) wie auch der zweite (24) Verriegelungsmechanismus zwecks gemeinsamer Verriegelung aller Rahmen (14, 12, 18) im Eingriff steht, einer zweiten "Trenn"-Stellung, in der lediglich der genannte, zweite Verriegelungsmechanismus (24) im Eingriff steht, so daß der genannte Zwischenrahmen (18) mit dem genannten, oberen Rahmen (12) verriegelt ist, um sich mit diesem im Verhältnis zum genannten, unteren Rahmen (14) gegen die genannte, erschütterungsarm arbeitende Federvorrichtung (70) bewegen zu können, und einer dritten "Justier"-Stellung drehbar ist, in der die beiden genannten Verriegelungsmechanismen (22, 24) nicht im Eingriff stehen, so daß der overe Rahmen (12) frei justierbar in jede beliebige Stellung im Verhältnis zum genannten, unteren Rahmen (14) gebracht werden kann, dadurch gekennzeichnet, daß der erste Verriegelungsmechanismus (22) eine Vorrichtung umfaßt, die kraftschlüssig mit der genannten Welle (30) verbunden ist, um mit ihr wahlweise eine Drehbewegung ausführen zu können, die entweder eine Verriegelung oder Freigabe in bezug auf zumindest einen aus einer Reihe vorwärts- oder rückwärtsgerichteter Zähne (20) am genannten, unteren Rahmen (14) bewirkt, weiterhin dadurch gekennzeichnet, daß die Mittelfläche aller Rahmen offen ist, so daß Teile eines Sitzfederungssystems (16, 98, 100), an dem der untere Rahmen (14) aufgrund seiner Ausführung befestigt werden kann, sich innerhalb der Grenzen der genannten Rahmen vertikal bewegen können.

2. Ein Aufbau gemäß Anspruch 1, dadurch gekennzeichnet, daß der genannte Zwischenrahmen (18) in bestimmten Abständen mit Öffnungen versehene, vertikale Halterungen (48, 50) aufweist, über die der genannte Zwischenrahmen (18) in freihängender Anordnung mit der genannten Justierwelle (30) verbunden ist.

3. Ein Aufbau gemäß Anspruch 1 oder Anspruch 2, dadurch gekennzeichnet, daß die Bewegung des Zwischenrahmens (18) in der genannten "Trenn"-Stellung im Verhältnis zum genannten, unteren Rahmen (14) erfolgt und federnd von einer Zug/Druck-Feder (70) aufgefangen wird, die an ihrem einen Ende mit dem unteren Rahmen (14) und an ihrem anderen Ende mit dem genannten Zwischenrahmen (18) verankert ist.

4. Ein Aufbau gemäß Anspruch 3, dadurch gekennzeichnet, daß Dämpfervorrichtungen (78, 82) am genannten, unteren Rahmen (14) befestigt sind, die in die vorwärts- und rückwärtsgerichteten Abschnitte des genannten Zwischenrahmens (18) eingreifen und das Auseinanderziehen oder Zusammendrücken der genannten Feder (70) räumlich begrenzen.

5. Ein Aufbau gemäß irgendeinem der vorstehenden Ansprüche, dadurch gekennzeichnet, daß sowohl der genannte, obere Rahmen (12) als auch der untere Rahmen (14) und der Zwischenrahmen (18) jeweils identische Montage- und Verriegelungseinrichtungen (20, 22, 24, 26) auf jeder Seite des Sitzes aufweisen.

6. Ein Aufbau gemäß Anspruch 5, dadurch gekennzeichnet, daß eine Justierwelle (30, 30') an jeder Seite des Sitzes vorgesehen ist, jedoch lediglich eine der genannten Wellen (30) eine Betätigungsvorrichtung (54) umfaßt, während die andere Welle (30') mit der genannten Welle (30) über einen Verbindungsmechanismus (56', 58, 60) verbunden ist, um eine Synchronbewegung sicherzustellen.

7. Ein Aufbau gemäß Anspruch 6, dadurch gekennzeichnet, daß der genannte Verbindungsmechanismus eine Justiervorrichtung (62) umfaßt.

8. Ein Aufbau gemäß irgendeinem der vorstehenden Ansprüche, dadurch gekennzeichnet, daß es sich bei dem genannten, zweiten Verriegelungsmechanismus um eine Klinke (24) handelt, die auf der genannten Welle (30) in einer "Leergang"-Anordnung (34, 36) montiert ist, so daß durch die Bewegung der genannten Welle aus ihrer "Sperr"-Stellung in ihre "Trenn"-Stellung der erste Verriegelungsmechanismus (22) freigegeben wird, während der genannte, zweite Verriegelungsmechanismus (24) im Eingriff bleibt, bis die genannte Welle (30) durch weitere Drehbewegung ihre "Justier"-Stellung erreicht hat.

9. Ein Aufbau gemäß Anspruch 8, dadurch gekennzeichnet, daß eine Torsionsfeder (38) den genannten, zweiten Verriegelungsmechanismus (24) in seine Eingriffstellung drückt.

10. Ein Aufbau gemäß irgendeinem der vorstehenden Ansprüche, dadurch gekennzeichnet, daß die genannte Justierwelle (30) mit einer Endlagenfedereinheit (64) verbunden ist, die sie entweder in ihre "Sperr"-Stellung oder in ihre "Trenn"-Stellung drückt.

11. Ein Aufbau gemäß Anspruch 10, dadurch gekennzeichnet, daß die Feder in der Endlagenfedereinheit (64) so gewählt wird, daß der zweite Verriegelungsmechanismus (24) durch die genannte Torsionsfeder (38) in verriegelter Stellung gehalten wird, während die Zähne (26') am genannten Zwischenrahmen (18) trotz des von der Endlagenfedereinheit (64) auf die Welle (30) ausgeübten Drehmoments in der "Trenn"-Stellung verbleiben.

FIG. 2

FIG. 1

FIG. 3

0 049 167